# EUROPEAN PATENT APPLICATION

(11) **EP 2 295 387 A1**
(43) Date of publication of application: **16.03.2011**
(21) Application number: 09252191.3
(22) Date of filing: 15.09.2009
(51) Int. Cl.: C04B 26/00, B09B 3/00

(54) **Cured materals and method of making such materials**

(71) Applicant: Imperial Innovations Ltd, London SW7 2AZ (GB)
(72) Inventor: Beshara, AbdelHamid Adel AbdelHamid, London SW7 3DU (GB); Cheeseman, Christopher Robert, Dr., Crawley RH10 7RF (GB)
(74) Representative: Hedley, Nicholas James Matthew

(57) **Abstract**

The present invention provides a method of making a cured material and cured materials made by the method. The method comprises compacting a mixture of:
a) 4% to 60% of at least one oxidisable and polymerisable vegetable oil, e.g. an unsaturated vegetable oil; and

b) 10% to 96% of a material having a high surface area between 1 and 5000 m²/g;
c) 0% to 80% of filler having a surface area of less than 1 m²/g and
d) 0% to 10% of other additives, e.g. plasticisers, pigments and catalysts; the percentages being calculated on the basis of the combined weight of a) to d),

and curing the compacted mixture.

The presence of the material having a high surface area causes the temperature in the compacted material to rise above the ambient temperature, thereby allowing the curing in a furnace with a lower ambient temperature (top two lines in Figure 1).

## Description

### Technical Field

The present invention relates to cured materials, especially building materials cast and casting materials, materials for isolating or encapsulating toxic and/or hazardous substances, and a method of manufacturing the cured materials from vegetable oils and minerals and a method for treating vegetable oil containing wastes, e.g. spent bleaching earth.

### Background Art

It is known that certain vegetable oils and fatty acids can polymerise in the presence of oxygen; the polymerisation involves the simultaneous oxidation of the oil or fatty acids.

GB 1 466 236 describes a method of manufacturing artificial stone by mixing together chalk, white lead (lead carbonate), linseed oil, white spirit and a colour pigment; the mixture is spread out, divided into blocks, dried and then cured, e.g. at temperatures of 450°F (232°C) for 7 hours.

WO 2001/74948 describes a method of making construction blocks by mixing dry sand with 5% by weight of vegetable oil (based on the weight of the sand), compacting the mixture into moulds and curing the mixture in the moulds at a temperature of 200 or 230°C for 1 to 12 hours. The resulting blocks have a strength of 412 to 2537 psi (2.8 to 17.5 Mpa), depending on the duration of curing. Other materials can be used instead of sand but they are not exemplified. The amount of vegetable oil that can be used is said to be 2% to 20% of the weight of the sand but the maximum amount used in the worked embodiments is 5%. Curing is done while the material is still in the mould, which is probably because the samples are fragile in their raw state so they could not be removed from the moulds without damage. As compared to curing of a block following removal from the mould, curing within the mould requires a longer curing time or a higher curing temperature in order to achieve the same level. It is also likely that amounts of oil in the exemplified embodiments cannot be higher than 5 % without the danger of the oil bleeding out, as taught in WO 2008/117077 below.

WO 2008/117077 describes a method of making construction materials by mixing partially cured vegetable oil with an aggregate, typically limestone aggregate having a particle size of less than 10mm, compacting the resulting mixture at pressures of 1-12 MPa and curing it at temperatures of up to 250°C. This specification teaches that, by removing the aggregate/oil mixture from a mould after compaction and before curing, a stronger block can be obtained. This specification teaches that the amount of vegetable oil should not be above about 5% since the oil bleeds out of the mixture. The use of partially cured oil decreases the curing time and provides a more complete polymerisation, especially at the centre of the material; it also helps bind the aggregate while in the raw stage since partially cured oil is more viscous than uncured (raw) oil. Compressive strengths up to 33Mpa were obtained for samples containing 5% oil compacted at 12MPa and cured at 160°C for 24 hours.

### Disclosure of Invention

The present invention provides a method of making a cured material comprising compacting a mixture of:
a) 4% to 60% of at least one oxidisable and polymerisable vegetable oil, e.g. an unsaturated vegetable oil; and
b) 10% to 96% of a material having a high surface area between 1 and 5000 m²/g;
c) 0% to 80% of filler having a surface area of less than 1 m²/g and
d) 0% to 10% of other additives, e.g. plasticisers, pigments and catalysts; the percentages being calculated on the basis of the combined weight of a) to d),
and curing the compacted mixture.

The surface area is by nitrogen adsorption at 77°K and using the BET (Brunauer, Emmet and Teller ) model to analyse the data. However, if the surface area of a material is very low, e.g. sand, such that the above methodology does not work, it can be calculated from the particle size distribution of the material.

The unsaturated vegetable oil is thoroughly mixed with the fine particle size, high surface area material (component b)), and the other ingredients (component c) and component d)) and the mix is compacted. In order to achieve a consistent product, the compaction may be performed at a predetermined compaction pressure or performed to achieve a predetermined density. The compaction pressure may be at least 0.2MPa, e.g. 1-30 MPa, for example 3-12MPa.

The surface area of the material of component b) is sufficiently high to initiate spontaneous oxidation and self-heating of the oil. The term "self-heating" is intended to convey that the temperature of the curing mixture will increase to above the ambient temperature and especially to more than 20°C, e.g. to more than 40°C, above the temperature of its surroundings, which may be the interior of a furnace or oven. The temperature rise should be measured at the centre of a sample, e.g. using a thermocouple. The "self-heating" aspect of the present invention allows the mixture to cure at a temperature higher than its ambient surroundings, which in some cases avoids the need to conduct the curing in a furnace while in other cases, where a furnace is used, the temperature of the furnace can be maintained at a lower temperature since the self-heating effect will increase the temperature of the curing mixture itself; this results in a considerable saving in energy as compared to the situation in which no self-heating occurs, in which case, the furnace must be maintained at the curing temperature. It may be necessary to heat the mixture up to a minimum temperature before the oxidation and self-heating is initiated and becomes self-sustaining. When the oil oxidation nears completion, the difference in temperature between the interior of the mixture and the surroundings will reduce. The above-quoted temperatures of 20° and 40° are the maximum temperature differences between the curing mixture and the surroundings that occur in the course of curing; the maximum temperature in the curing mixture will generally be found in the interior of the mixture.
The present invention therefore provides a significant saving in energy as compared to the prior art where polymerisation appears to be slower (at a given temperature of the surroundings) or energy is required to maintain the curing composition at a higher temperature.

While not desiring to be bound by any theory, it is believed that the high surface area component b) catalyses the oxidation and polymerisation of the oil, allowing it to precede more quickly than the prior are and so releasing the energy during the oxidation and polymerisation reaction in a shorter time period, giving rise to a significant increase in temperature within the curing mixture.

Curing temperatures given herein are the temperatures of the curing materials themselves and, as explained above, this can be substantially higher than the ambient temperature. The temperature can be taken remotely by measuring the infrared radiation emitted during curing as is well-known or using a thermocouple embedded into a test sample of the curing material. The temperature rise in the centre of the curing material will be greater than at the surface but there is a correlation between the surface and the interior of a sample, which can be found by simple experiments for the curing conditions and compositions concerned so that, during production, only the surface temperatures need be measured, e.g. using an ir temperature sensor.

In a preferred embodiment, the mixture is heated in a first step to an initial low temperature, where the oil oxidation is initiated and the mixture is maintained at this temperature for a limited time period, followed by a second step at a higher temperature. The two step process reduces the occurrence of cracking, which can occur if the whole of the curing takes place at the temperature of the second step.

The physical and chemical properties of the polymerised vegetable oil composite are suitable for various applications; it can be used, for example,
- to form building materials such as tiles, bricks, blocks, beams, columns and arches for use in the construction industry,
- as casting materials.
- for encapsulating or for isolating toxic and/or hazardous substances for subsequent storage, for example wastes containing soluble salts and materials (the term "soluble" materials includes materials that are sparingly soluble), and especially wastes that can damage the environment, which are often called "ecotoxic" materials.
- to form composite materials in combination with reinforcing materials, especially fibres such as glass and carbon fibres or textile fibres. The composite is particularly useful in the built environment due to its light weight and high dimensional stability in extreme change of temperature conditions.

The vegetable oil (component a)) must be able to undergo an oxidation polymerisation reaction and is, for example, an unsaturated vegetable oil or a fatty acid or a mixture thereof. It may be a raw (unused) or waste oil (for example used frying oil); oils that may be used include corn, cottonseed, peanut, olive, soybean, rapeseed, sunflower, linseed, coconut and canola oils or a mix of these. The oil content in the mix should be between 4 and 60 wt % (based on the total weights of components a) to d)); the minimum amount will be dictated by the desired properties of the product since generally the greater the amount of oil, the greater is the strength of the final cured product. The amount may be at least 5%, such as at least 10% and may be at least 20%. The maximum amount of oil will be dictated by the ability of the mixture to retain the oil without bleeding when compacted prior to curing. This will depend on the compaction pressure and the nature of the other components of the mixture but the maximum may be 40%, for example 30% such as 20 or 25%.

The material having a high surface area (component b)), will generally be a predominantly inorganic solid material (e.g. a mineral such as clay, alumina, silica, perlite, etc...but may also be carbon based such as an activated carbon. In one embodiment, component b) may be bleaching earth (also known as "activated bleaching earth", "bleaching clay" or "activated Fuller's earth"), which is used as a decolourising agent in the refining of vegetable oils, animal fats, mineral oils and waxes. Spent bleaching earth is a byproduct of the refining of vegetable oils and contains a substantial proportion of oil as well as impurities removed during the refining process. Therefore, such spent bleaching earth already contains components a) and b) above and so can be used directly, optionally with the addition of other components in the present invention. Since spent bleaching earth is a waste product that has to be disposed of, this aspect of the present invention also has the advantage that it avoids the need for such disposal, e.g. in landfill sites, as well as making a useful product.

In a preferred embodiment, the specific surface area of component b) and the amount of this component are such that the oil undergoes an oxidation and polymerisation reaction that is self-heating, i.e. the temperature of the curing material is higher than the ambient temperature. This only happens when component b) has a high surface area,; the specific surface area of component b) should be between 1 and 5000 m²/g, and typically between 10 and 1000 m²/g. However, even if the oxidation and polymerisation of the oil is fully not self-heating, the inclusion of the material having a high surface area (component b)) in the composition requires a much lower energy input than the use of lower surface area materials, e.g. sand.

A high surface area material need not necessarily have to have a small grain size since it could be formed of porous grains so that the internal pore volume provides a high internal surface area). However it is better if the high surface area material also has a small grain size, e.g. a grain diameter smaller than 10µm and generally less than 1µm, as this minimises the dissipation of heat to the surroundings.

The amount of component b) may be 10 to 96%, e.g. 50 - 92%, such as 60 - 90%, for example 80 - 90% (based on the total weights of components a) to d)).

Components c) and d) are optional. Component c) adds to the strength of the cured composition, limits shrinkage during curing and also makes the product cheaper; component c) may include fine aggregates, e.g. sand, small gravel, ground glass and fly ash, having a particle size less than 15mm, e.g. 0.05 mm to 15 mm. The actual maximum particle size will depend on the actual use since thin tiles can only accommodate aggregates having relatively small particle sizes bricks and blocks can accommodate much larger aggregate particle sizes. The maximum size for some applications will be 5mm, e.g. 3mm, such as 1mm. The particle size of component c) may be at least 0.05mm, such as at least 0.1mm. The addition of component c), especially sand and other mineral powders, having a particle size of 0.05 to 2mm is particularly beneficial in controlling shrinkage during curing.

When the polymerised oil is used for encapsulating hazardous and/or toxic waste, such waste may be present in the composition as component c).

Where particle sizes are quoted herein, we mean that at least 80% by weight of the particles in the material have the quoted size and may include a minor proportion (20% or less, e.g. 10% or less, such as 5% or less) outside those limits

Component d) includes materials that are customarily added to building materials, e.g. plasticisers and pigments, but may also include catalysts that catalyse the oxidation and polymerisation reaction, e.g. iron, copper, nickel, zinc, zirconium, aluminium and titanium ions or materials that give rise to such ions *in situ.* The catalysts may be naturally present in the material of the other components.

The cured material can also be reinforced by incorporating, for example steel or other reinforcing or strengthening materials such as glass fibres of other types of fibre.

The mix is pressed in a suitable mould using static or dynamic compaction or extrusion. This may involve hand compaction methods or uniaxial or isostatic compaction. The compaction pressure will depend on a number of factors:
(1) the greater the compaction pressure, the lower is the porosity of the compacted mix. Oxygen is necessary for the curing to the oil and must diffuse into the material from the atmosphere. If the porosity of the compacted material is too low, this could hinder oxygen diffusion and prolong curing. Higher compaction pressures can generally be tolerated for relatively thin materials than for thicker materials since oxygen has a shorter diffusion distance to travel to reach the centre of the materials.
(2) Generally, the lower the porosity, the longer is the required curing time and so if a short curing time is needed, the compaction pressure should be kept relatively low.
(3) High compaction pressures will generally produce a stronger, higher density product.

Typically pressures up to about 30 MPa may be used.

The compacted material (e.g. brick/block/tile/beam/column/arch) is removed from the mould for curing in air. Depending on a number of factors, including the temperature of the mixing and compaction, the oil used and the degree of compaction, the exposure of the material to oxygen in the air can cause a thin film of oil on the high surface area solid material (component b)) to spontaneously heat. However with some combinations of some vegetable oils and some degrees of compaction, or if the oil and solid material are mixed at room temperature, e.g. below 60°C, the compacted raw mix may need additional heating to initiate the spontaneous heating reactions and complete the curing process. In one example of the method, the mixed components a) to d) are at a temperature of between 80 and 150°C when they are compacted. The curing process can be complete in a relatively short time after removal of the material from the mould, typically less than 90 minutes but thicker materials may require longer curing time. The presence of oil polymerisation metal catalysts in the mix will also affect the curing time. Typically curing can be achieved at temperatures between 60 and 260°C, typically 100 to 220°C, for 0.5 to 12 hours and typically between 1 to 4 hours.

In some circumstances, an initial temperature above about 180°C can lead to the product cracking, which is believed to be due to differential shrinkage, water evaporation or the escape of entrapped air. Depending on the degree of compaction and the vegetable oil content, a two-stage or multi-stage curing process may be preferred over a one-stage process. It has been found that this can avoid cracking of samples during curing. In one version of the method, samples are initially cured at low temperature (60°C -150°C, e.g. 80 - 120°C, such as 90 - 110°C) for 0.5 to 2 hours before being cured at temperatures of 180-260°C (e.g. 190 - 240, such as 200 - 230°C) until curing is complete, which may be for 0.5 to 12 hours and typically between 1 to 4 hours. The most efficient combination of low and high temperatures depends on the applied compaction pressure, the oil content and the surface area of the solid material and so should be optimised for the specific combination used.

Curing temperatures given herein are the temperatures of the curing materials themselves and, as explained above, this can be substantially higher than the ambient temperature. The temperature can be taken remotely by measuring the infrared radiation emitted during curing as is well-known or using a thermocouple embedded into a test sample of the curing material. The temperature rise in the centre of the curing material will be greater than at the surface

The curing temperature is prevented from rising too high by controlling the degree of compaction and the external temperature around the curing material.

The curing process in either the one-stage curing process or the multi-stage process may also use microwave radiation and/or ultra-violet light to trigger the oxidation and polymerisation reactions, although ultraviolet radiation does is not always effective since it can sometimes cause the oxidation and polymerisation reaction to occur only on the surface of the compacted material since the radiation cannot penetrate deeply into the material..

During curing, the surfaces of the compacted material should preferably not be obstructed (or only obstructed to the minimum extent feasible) so that the maximum available surface area is exposed to air, allowing as large an amount of oxygen as possible to diffuse into the material. Thus, for example, tiles made of the compacted material should be cured while standing on one of their sides rather than on one of their major flat faces.

Because of the rate of heat evolution during curing due to the presence of the high surface area material, the described binder system has a low embodied energy, i.e. low amount of energy is consumed during the making or manufacturing of the material and can use renewable materials and/or waste materials and so it is an environmentally beneficial product. Furthermore, the material can be recycled at the end of its product life.

The present invention also provides a product comprising a cured compacted mixture of:
a) 4% to 50% of at least one cured oxidised and polymerised vegetable oil or fatty acid, e.g. an unsaturated vegetable oil; and
b) 10% to 96% of a material having a high surface area between 1 and 5000 m²/g;
c) 0% to 40% of one or more fillers having surface area less than 1 m²/g, e.g. a particle size of 0.05 mm to 15 mm; and
d) 0% to 10% of other additives, e.g. plasticisers, pigments and catalysts; the percentages being calculated on the basis of the combined weight of a) to d).

The cured oil weighs less than the uncured oil; the weight loss is generally from 5 to 15% and can even be as high as 20%.

The material of the present invention satisfies the following important considerations, which are key for many applications
1- it is relatively light compared to comparable building materials made from clay (it can have a specific gravity of about 1),
2- it has a high dimensional stability, which is important in building materials;
3- it has high strength, e.g. unconfined compressive strength (UCS) in excess of 50MPa has been achieved, as reported below;
4- it has a low carbon footprint as the main components (a) and (b) being used are (or can be) either renewable plant-based materials (oil and fatty acids) or waste materials (e.g. spent bleaching earth and used oils), and the curing process is energy efficient;
5- it can have a low production cost as a result of the use of waste materials and low energy requirement.
6- it is hydrophobic and does not absorb significant amounts of water
7- depending on the raw material being used, it can have a relatively low pH (about 4) compared to a lot of building materials; such a low pH can be achieved if bleaching earths are used as component b).

The above properties makes the product suitable for encapsulating hazardous and toxic waste; if used for this application, the waste is pulverised and, as stated above, may be present in the composition as component c).

### Examples and Brief Description of the Drawings

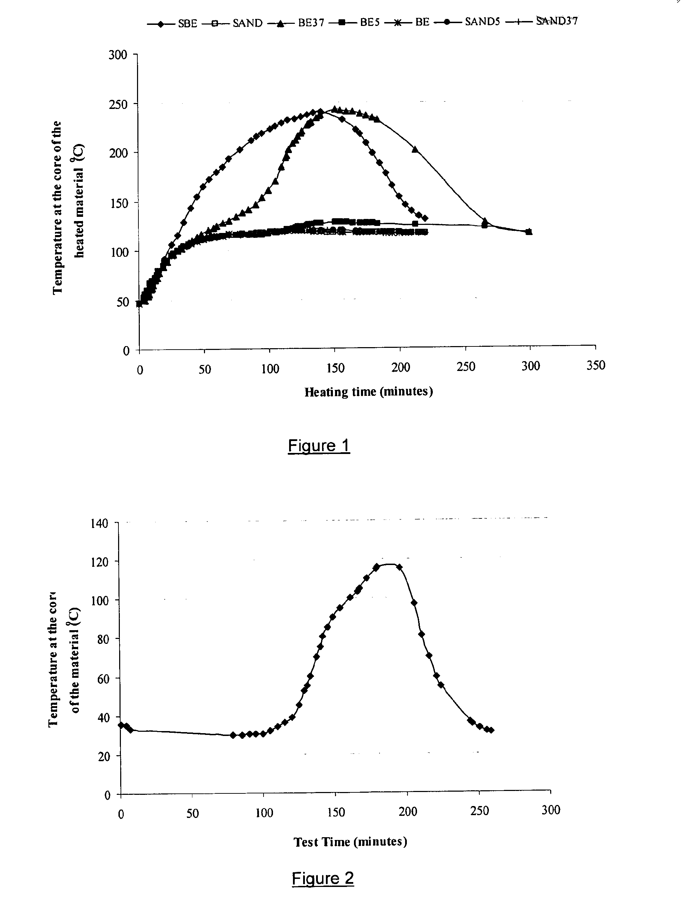

There will now be described, by way of example only some examples of the materials and methods of the present invention, the results being shown in the graphs of Figures 1 to 3:

### Example 1: Spontaneous heating effect at 110°C

Acid activated bleaching earth (BE) having a specific surface area ∼250m²/g (representing component b)) was thoroughly mixed with refined sunflower oil Unilever brand (component a)) at room temperature. Two mixtures were prepared at the following ratios of total weight:
- Mixture 1: 63% of component b) and 37% of component a), which will be referred to as **BE37)**
- Mixture 2: 95% of component b) and 5% of component a), which will be referred to as **BE5)**

Two comparative mixtures were also made that were the same as Mixtures 1 and 2 except that fine silica sand (SAND) was used to replace the bleaching earth as component b) of the mixtures; the two additional comparative mixtures will be referred to as **SAND37** and **SAND5).** The sand had a specific surface area less than 1m²/g

Three further composition was tested, namely
100% of the above sand **(SAND)**
100% bleaching earth **(BE)** and
spent bleaching earth **(SBE),** a waste material which is composed of 63% of bleaching earth and 37% of unbleached sunflower oil (which contains more pigments and oxidation products than refined oil).

SAND, BE, SAND 37 and SAND5 were used as controls, i.e. they are not in accordance with the present invention, while BE5, BE37 and SBE are in accordance with the present invention, although BE5 is not a preferred embodiment since it contains an amount of oil at the lowest limit of that allowed.

All mixtures were put rounded glass plates to a depth of - 4cm. The plates was introduced into a 110°C oven. A thermocouple was used to measure the change in the internal temperature of the mixtures with time.

The results are shown in Figures 1 and 2. Both SBE and BE37 heated at 110°C underwent a self-heating effect reaching a maximum temperature of over 240°C (Figure 1). The self- heating of SBE started after 20 minutes from the beginning of the test and reached its maximum temperature of 240°C after 140 minutes. For the BE37, the self-heating started after 40 minutes and reached its maximum of over 240°C after 150 minutes. It's worth noting that the self-heating phenomenon lasted for - 3hours and 20 minutes for both SBE and BE37 during which a significant amount of extra energy was being released.

BE5 (Bleaching earth with an oil content of 5%) was only subjected to a slight heating effect (∼15°C rise in the temperature). No heating effect has occurred in either SAND5, SAND37, SAND (no oil) or BE (no oil) and their temperatures remained almost equal to that of the oven temperature during the complete period of the test.

### Example 2 Spontaneous heating effect at room temperature

The same experiment as in Example 1 was repeated for BE37 but at room temperature (-23°C) and the results are shown in Figure 2. It was noticed that the self-heating effect also occurred even at room temperature. After an induction period of -100minutes, the temperature of the bleaching earth started to increase and reached a maximum of ∼120°C after 180 minutes. The self-heating phenomenon lasted for more than 2hours and 30 minutes.

### Example 3: Effect of the curing time on the unconfined compressive strength (UCS) for monolithic samples made from spent bleaching earth.

Cylindrical samples having a ratio of height to diameter of 2 were prepared by pressing spent bleaching earth (SBE), a high surface area waste material containing 37∼40% sunflower oil and 60 to 63% bleaching earth by total weight. The samples were prepared using uniaxial compaction pressures of 1, 3 and 6Mpa. Pressed samples were removed from their moulds and cured for 1,2,3,4,5,12 and 24 hours at 150°C. Samples were cooled down and tested for their UCS.

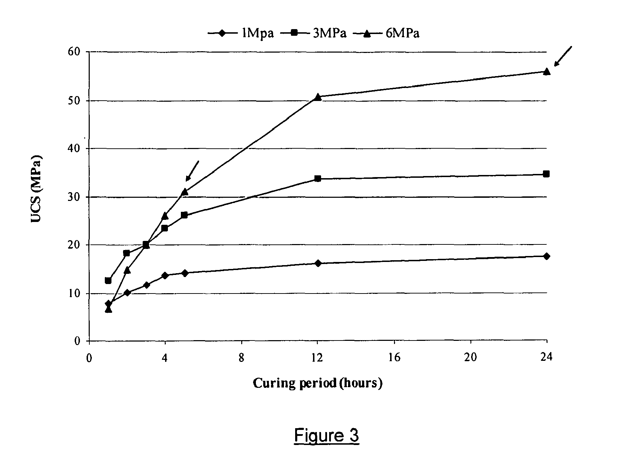

Figure 3 shows the development of the UCS with time. The results show a significant decrease in the curing time and temperature needed to achieve high strength results as compared to the prior art methods of WO01/74948 and WO5008/117077. An UCS of 31 Mpa has been achieved for SBE samples pressed at 6Mpa and cured at 150°C for 5hours compared with the highest UCS of 33MPa being reported in WO 2008/117077 for samples pressed at 12MPa (double the compaction pressure) and cured for 24 hours (almost five times longer curing period) at 160°C (10°C higher). The highest UCS in the present example (56Mpa) for samples pressed at 6MPa and cured at 150°C for 24 hours, which is a level of strength that has not been reported in the above prior art documents for vegetable oil polymer composite materials.

### Example 4: Two-stage curing regime for highly compacted samples

Two sets of SBE samples were pressed at 10 MPa to form cylindrical samples of height to diameter ratio of 2. After removal from their moulds, one set was heated at 150°C for 48 hours and the other set was preheated at 110°C for 2 hours followed by heating at 150°C for 48 hours. At the end of the curing period, samples were cooled down then tested for their UCS. The UCS of the preheated samples (two stage heating) reached 69MPa while those which underwent no pre-treatment (one stage heating) developed severe cracks, which precluded meaningful tests.

In summary, Example 1 and 2 show how it is possible to generate heat by mixing the oil with a high surface area catalytic material compared with sand. They also show that the heating effects begin to manifest themselves when the amount of oils exceed 4 or 5% and increase significantly when the oil content is higher. Example 3, shows the development of the unconfined compressive strength (UCS) with time for monolithic UCS samples. The results show a significant decrease in the curing period and temperature needed to achieve UCS results similar to those being reported in the prior art Example 4 shows how very high strengths (- 70MPa) can be achieved using the multi stage curing regime being proposed, which was not achieved using a one stage curing regime of the prior art.

## Claims

1. A method of making a cured material comprising compacting a mixture of:
a) 4% to 60% of at least one oxidisable and polymerisable vegetable oil or fatty acid, e.g. an unsaturated vegetable oil; and
b) 10% to 96% of a material having a high surface area between 1 and 5000 m²/g;
c) 0% to 80% of filler having a surface area below 1 m²/g and especially a particle size of 0.05 mm to 15 mm; and
d) 0% to 10% of other additives, e.g. plasticisers, pigments and catalysts; the percentages being calculated on the basis of the combined weight of a) to d),
and curing the compacted mixture.

2. A method as claimed in claim 1, wherein the vegetable oil (component a)) is selected from corn, cottonseed, peanut, olive, soybean, rapeseed, sunflower, linseed, coconut and canola oils or a mix of these.

3. A method as claimed in claim 1 or claim 2, wherein the amount of unsaturated oil is at least 5%, such as at least 8 or 10% and may be at least 20 and/or is less than 60%, for example less than 50%, such as 30 to 45%.

4. A method as claimed in any preceding claim, wherein the material having a high surface area (component b)) is predominantly inorganic solid material, e.g. a mineral such as clay, or a carbon based material such as an activated carbon.

5. A method as claimed in any preceding claim, wherein component b) has a specific surface area of 10 to and 1000 m²/g.

6. A method as claimed in any preceding claim, wherein the amount of component b) is 40 - 90%, such as 50 - 80%, for example 55 - 75%.

7. A method as claimed in any preceding claim, wherein component c) is hazardous or toxic.

8. A method as claimed in any preceding claim, wherein component c) is particulate and has a particle size not greater than 5mm, e.g. 3mm, such as not greater than 1 mm and a particle size that is not less than 0.05mm, such as not less than 0.01 mm, e.g. has a has a particle size of 0.05 to 2mm.

9. A method as claimed in any preceding claim, wherein the amount of component c) is 0 - 40%, such as 10 - 30%, for example 15 - 25% by weight based on the total weight of components a) to d).

10. A method as claimed in any preceding claim, wherein the mix is pressed in a mould using static or dynamic compaction, e.g. using hand compaction methods or uniaxial or isostatic compaction, or extrusion, for example at a pressure of up to about 30 MPa.

11. A method as claimed in any preceding claim, wherein the components are mixed at an elevated temperature, e.g. of 60 to 260°C, for example 80 to 150°C or the components are heated after mixing to such a temperature.

12. A method as claimed in any preceding claim, wherein the curing takes place in at least two stages:
a) in a first stage curing is effected at a temperature of 60°C -150°C, e.g. 80 - 120°C, such as 90 - 110°C for 0.5 to 2 hours and
b) in a second stage at a temperatures of 180-260°C (e.g. 190 - 240, such as 200 - 230°C) until curing is complete.

13. A building or encapsulating product comprising a cured compacted mixture of:
a) 4% to 50% of at least one cured oxidisable and polymerisable vegetable oil or fatty acid, e.g. an unsaturated vegetable oil; and
b) 10% to 96% of a material having a high surface area between 1 and 5000 m²/g;
c) 0% to 40% of one or more fillers having surface area less than 1 m²/g, e.g. a particle size of 0.05 mm to 15 mm; and
d) 0% to 10% of other additives, e.g. plasticisers, pigments and catalysts; the percentages being calculated on the basis of the combined weight of a) to d).

14. A building, cast or encapsulating product as claimed in claim 13 that includes reinforcement, for example steel or other reinforcing or strengthening materials such as glass fibres or other types of fibre.

15. Use of a product as claimed in claim 13 of claim 14:
- for encapsulating toxic or hazardous waste, wherein the waste is pulverised and is present in the composition as component c)
- as building materials or cast materials, such as tiles, bricks, blocks, beams, columns and arches for use in the construction and other industries
- for forming a composite material, together with reinforcement, such as steel strands or other reinforcing or strengthening materials such as glass or carbon fibres or other types of fibre.
